# FASCICULE DE BREVET EUROPEEN

(11) **EP 2 791 866 B1**
(45) Date de publication et mention de la délivrance du brevet: **22.07.2015**
(21) Numéro de dépôt: 12810362.9
(22) Date de dépôt: 06.12.2012
(51) Int. Cl.: G06K 9/32, B07C 3/00

(54) **PROCÉDÉ DE TRAITEMENT D'ENVOIS POSTAUX AVEC GÉNÉRATION DE MODÈLES NUMÉRIQUES DE FILANTES SUR BORNE INTERACTIVE**
VERFAHREN ZUR VERARBEITUNG VON POSTSTÜCKEN MIT ERZEUGUNG NUMERISCHER MODELLE VON DRUCKSACHEN AUF EINER INTERAKTIVEN ANLAGE
METHOD OF PROCESSING POSTAL ITEMS WITH GENERATION OF NUMERICAL MODELS OF MAILSHOTS ON AN INTERACTIVE STATION

(30) Priorité: 15.12.2011 FR 1161708
(43) Date de publication de la demande: 22.10.2014
(73) Titulaire: Solystic, 92220 Bagneux (FR)
(72) Inventeur: PSZATKA, Jean-Marc, F-93290 Tremblay En France (FR); BENYOUB, Belkacem, F-91120 Palaiseau (FR); PIEGAY, Emmanuel, F-75010 Paris (FR)
(74) Mandataire: Prugneau, Philippe
(86) Numéro de dépôt international: PCT/FR2012/052824
(87) Numéro de publication internationale: WO 2013/088029

(56) Documents cités:
- EP-A1- 1 622 065
- US-A1- 2004 005 080
- US-A1- 2009 141 934

## Description

### Domaine technique

Le domaine de l'invention est celui du tri automatique de lots d'envois postaux homogènes ou filantes, les envois postaux pouvant être des lettres, des objets plats de grand format (par exemple des magazines ou journaux mis sous enveloppe en plastique ou en papier) ou encore des paquets.

L'invention concerne plus particulièrement un procédé de traitement d'envois postaux selon lequel on introduit des envois postaux en série dans une machine de tri postal comprenant un convoyeur de tri et des sorties de tri, on forme dans la machine une image numérique de chaque envoi postal et on applique sur chaque image numérique un traitement de reconnaissance automatique d'une information d'adresse pour diriger automatiquement l'envoi postal correspondant à travers le convoyeur vers une sortie de tri déterminée de la machine.

### Technique antérieure

La détection de filante est bien connue dans le traitement du courrier d'expéditeur en nombre. Classiquement, les envois postaux d'un expéditeur en nombre (un lot usager) constituent des filantes et quand une filante d'envois postaux est introduite dans une machine de tri pour une première passe de tri, l'Opérateur paramètre la machine de tri pour préciser au traitement de reconnaissance d'adresse la position spatiale du bloc d'adresse destinataire dans les images numériques des envois postaux de la filante. Ce paramétrage peut être réalisé à l'aide d'un écran d'affichage de la machine de tri en pointant sur l'écran la position spatiale de la zone d'intérêt correspondant au bloc d'adresse de destinataire ou encore en faisant passer dans la machine de tri, en avant d'envois postaux de la filante, un intercalaire spécifique sur lequel est dessinée la zone du bloc d'adresse de destinataire comme décrit dans le document de brevet US 7,978,878.

Toutefois, ces procédés connus d'identification de filantes ont l'inconvénient de faire intervenir l'Opérateur sur la machine de tri ce qui affecte globalement le débit de la machine de tri et retarde en fait le processus de tri en lui-même. En pratique, ces techniques d'identification manuelle de filantes ne sont utilisées que pour des filantes de très gros volume (plusieurs milliers d'envois postaux) et dans lesquelles les envois postaux ont une structure graphique très stable. Par ailleurs, ces techniques manuelles d'identification de filantes ne sont pas adaptées au tri d'objets postaux de grand format avec lesquels les filantes ont des volumes beaucoup plus petits de l'ordre d'une centaine d'envois postaux par filante.

Un procédé de traitement d'envois postaux comme indiqué plus haut dans lequel on détecte automatiquement l'apparition d'une filante, c'est-à-dire une succession d'envois postaux homogènes ayant la même apparence graphique, est connu du document de brevet EP 1 622 065. Dans ce procédé connu, des modèles numériques de filante sont construits automatiquement au fil de l'eau à partir des images numériques des envois postaux homogènes. Ces modèles numériques de filante sont stockés automatiquement dans une base de données qui constitue une sorte de dictionnaire de modèles de filante et chaque image numériques d'un envoi postal lors du processus de tri est comparée aux modèles de filantes stockés dans le dictionnaire et si un des modèles correspond à l'image numériques de l'envoi postal courant, on extrait du modèle des indications pour le processus de reconnaissance automatique d'adresse de destinataire. Ce processus de construction automatique de modèles de filante est plutôt adapté à des filantes de petit volume mais si les identificateurs des envois postaux en machine sont des signatures d'images numériques comme décrit dans le document de brevet EP 1 519 796, il est possible d'exploiter ces modèles de filante non seulement en première passe de tri mais aussi dans les autres passes de tri subséquentes de façon à renforcer la robustesse du traitement de reconnaissance d'adresse.

Toutefois, dans ce procédé connu, chaque modèle de filante est construit seulement après le passage en machine d'un nombre suffisant d'envois postaux constituant la filante de sorte que les premiers envois postaux de la filante ne bénéficient pas d'un traitement de reconnaissance d'adresse renforcé.

Le document de brevet EP 1 622 065 divulgue la création online de modèles de filantes lors du passage des envois postaux de la filante dans la machine de tri. La construction du modèle de filante se fait donc de façon automatique ainsi que l'association des indications de paramétrage pour le traitement de reconnaissance par OCR. Le document de brevet US 2009/0 141 934 divulgue un procédé de traitement d'envois postaux dans lequel on passe dans la machine un intercalaire qui représente la zone d'intérêt pour l'OCR. Le document de brevet US 2004/0 005 080 divulgue un procédé de traitement d'envois postaux dans lequel l'Opérateur paramètre directement la machine de tri pour trier des envois postaux de filante. Ces autres procédés connus ne permettent pas aux premiers envois postaux de la filante de bénéficier d'un traitement de reconnaissance d'adresse renforcé.

### Exposé de l'invention

Le but de l'invention est donc d'améliorer encore plus l'efficacité de l'identification de filantes dans des lots d'envois postaux.

L'idée à la base de l'invention est de pouvoir générer des modèles de filantes en avance sur le passage en machine de tri des envois postaux des filantes, ces modèles étant des modèles numériques compatibles avec les modèles numériques de filantes qui sont générés automatiquement au fil de l'eau comme présenté ci-dessus. L'invention part de l'idée d'utiliser une borne d'acquisition interactive reliée à une base de données pour saisir l'image numérique d'un envoi postal de la filante, cet envoi postal étant prélevé par un Opérateur dans le flux de courrier avant l'arrivée du courrier en entrée de la machine de tri pour une première passe de tri.

A cet effet, l'invention a pour objet un procédé de traitement d'envois postaux homogènes ou filantes selon lequel dans une zone de préparation du courrier on prépare les envois postaux d'une filante dans des bacs ou sur des chariots et on emmène ces envois préparés vers l'entrée d'une machine de tri postal pour une première passe de tri postal, et dans lequel on introduit des envois postaux en série dans la machine de tri comprenant un convoyeur de tri et des sorties de tri, on forme dans la machine de tri une image numérique de chaque envoi postal et on applique sur chaque image numérique un traitement de reconnaissance automatique d'une information d'adresse pour diriger automatiquement l'envoi postal correspondant à travers le convoyeur vers une sortie de tri déterminée de la machine de tri, caractérisé par les étapes suivantes en avance du premier passage des envois postaux de la filante dans la machine de tri :
a) former, à l'aide d'une borne d'acquisition interactive qui est disposée à distance de la machine de tri, une image numérique d'un certain envoi postal de la filante, la borne d'acquisition interactive comportant un scanner avec une caméra, un socle de présentation sur lequel un Opérateur vient placer à plat face à la caméra le certain envoi postal de la filante pour saisir une image numérique de la face de celui-ci comportant une adresse de destinataire, une interface Homme/Machine avec écran d'affichage et clavier reliée à une unité de traitement de données connectée à la base de données,
b) calculer dans l'unité de traitement de données à partir de cette image numérique des attributs ou descripteurs de filante pour construire dans la base de données, le modèle numérique de filante, et
c) associer dans la base de données le modèle de filante aux indications de paramétrages à partir de la borne d'acquisition interactive, les indications étant saisies aussi depuis la borne d'acquisition interactive.

Avec le procédé selon l'invention, on peut construire automatiquement dans une base de données locale à la machine de tri des premiers modèles numériques de filante comme indiqué plus haut tandis que des seconds modèles graphiques de filantes peuvent être construits depuis une ou des bornes d'acquisition interactives distantes dans une autre base de données hébergée par exemple dans un serveur distant de la machine de tri mais accessible par celle-ci à travers un réseau de communication comme internet. Les premiers et seconds modèles graphiques de filante peuvent être consolidés et exploités lors de la première passe de tri mais aussi lors des passes de tri ultérieures comme indiqué plus haut. Un modèle numérique de filante généré automatiquement ou à travers une borne d'acquisition interactive consiste dans des données numériques qui caractérisent l'apparence graphique des envois postaux d'une filante telle qu'elle apparaît dans l'image numérique des envois postaux de la filante. Ces données numériques sont comme des attributs ou descripteurs représentatifs des caractéristiques physiques des images numériques et choisis pour être invariants à la rotation des images numériques. Ces descripteurs peuvent être basés sur des caractéristiques locales selon un partitionnement (segmentation de l'image numérique) multi-échelles ou globales des pixels dans les images numériques en multi-niveaux de gris ou en format binaire (après binarisation ou seuillage) comme décrit dans le document de brevet EP 1 519 796. Les données peuvent par exemple être des statistiques de luminance. L'appartenance d'une image numérique d'un envoi postal à un modèle de filante peut s'établit selon un critère de ressemblance graphique, par exemple un critère basé sur un coefficient de corrélation normalisée appliqué sur les descripteurs numériques du modèle et de l'image numérique de l'envoi postal en question.

Selon une particularité du procédé selon l'invention, les indications saisies par l'intermédiaire de la borne d'acquisition interactive sont des données de localisation spatiale d'une zone d'intérêt dans l'image numérique d'un envoi postal. Cette zone d'intérêt peut être le bloc d'adresse destinataire sur l'envoi postal. La zone d'intérêt peut aussi être le bloc d'adresse expéditeur ou encore la zone d'affranchissement, une zone comportant une flamme publicitaire comme un logo ou toute autre zone spécifique à un type de courrier (par exemple les paquets) dans laquelle une certaine information est à reconnaître automatiquement (généralement par OCR) pour par exemple être soumise à un traitement de données particulier en aval du processus de reconnaissance automatique de l'information d'adresse.

Selon une autre particularité du procédé selon l'invention, les indications saisies par l'intermédiaire de la borne d'acquisition interactive sont des données de désignation d'un algorithme particulier de traitement, par exemple un algorithme particulier de binarisation des pixels d'une image numérique. Par exemple les adresses destinataire imprimées par jet d'encre sur un support plastique de type « bande opaque » apparaissent bien souvent par transparence à travers le film plastique au milieu d'une multitude d'autres symboles ou graphismes. Il en résulte que la reconnaissance automatique de ces informations d'adresse est complexe et la bonne reconnaissance dépend du choix de l'algorithme de binarisation qui est appliqué sur l'image numérique en multi-niveaux de gris. Selon l'invention, la borne d'acquisition interactive pourra disposer de plusieurs algorithmes de binarisation et l'Opérateur sur la borne d'acquisition interactive pourra aider au choix de l'algorithme de binarisation optimal pour l'associer dans la base de données au modèle numérique de filante correspondant.

Selon encore une autre particularité du procédé selon l'invention, les indications saisies par l'intermédiaire de la borne interactive peuvent comporter en plus des données de désignation d'un expéditeur d'envois postaux, en particulier un expéditeur de courrier en nombre. Ces données de désignation peuvent consister dans le nom de l'expéditeur qui peut être saisi par l'intermédiaire d'un clavier d'ordinateur depuis la borne. Dès lors pendant le tri des envois postaux avec détection des filantes, on peut associer en mémoire aux modèles de filante des données résultant de la reconnaissance d'information dans les images numériques des envois postaux à des fins d'établissement de statistiques par exemple en calculant un taux de bonne reconnaissance d'adresse de destinataire par modèle de filante ou encore par expéditeur référencé dans les modèles de filante.

Selon encore une particularité du procédé selon l'invention, la machine de tri est disposée dans un centre de tri postal qui comprend une zone de préparation du courrier dans laquelle le courrier est stocké dans des réceptacles pour être amené dans la machine de tri. Cette zone de préparation est typiquement située entre des quais d'arrivée du courrier par camion, train ou avion et la zone de tri elle-même où est placée la machine de tri. Selon l'invention, la borne d'acquisition interactive est placée avantageusement dans cette zone de préparation du courrier du centre de tri ou du bureau de distribution pour optimiser le travail de l'Opérateur qui dans ce flux de courrier est à même d'identifier rapidement les envois postaux des filantes. Les modèles numériques de filante sont ainsi créés en avance temporelle sur la phase de tri des envois postaux dans la machine de tri, c'est-à-dire en amont de la première passe de tri ce qui ne retarde pas le processus de tri et ce qui en même temps renforce la robustesse du processus de reconnaissance automatique d'adresse dans les images numériques des envois postaux.

Par extension de cette idée, les modèles numériques de filante pourraient être saisis dans un centre de routage en amont des centres de tri distribution ou encore directement chez les expéditeurs en nombre. A partir de la borne d'acquisition interactive, un Opérateur peut donc saisir des modèles des filantes constituées dans un centre de routage de différents flux de courrier décentralisés. Toutefois, la mise en placé des bornes d'acquisition interactives dans les zones de préparation du courrier comme indiqué plus haut constitue une solution opérationnelle très simple pour les Opérateurs postaux.

### Description sommaire des dessins

L'invention sera maintenant décrite plus en détail et en référence aux dessins annexés qui en illustrent un exemple non limitatif.
La figure 1 illustre de façon très schématique une borne d'acquisition interactive selon l'invention dans une installation de tri postal automatique.
La figure 2 illustre le processus de génération des modèles numériques de filante selon l'invention.
La figure 3 illustre le processus de détection de filantes selon l'invention.

### Description d'un mode de réalisation

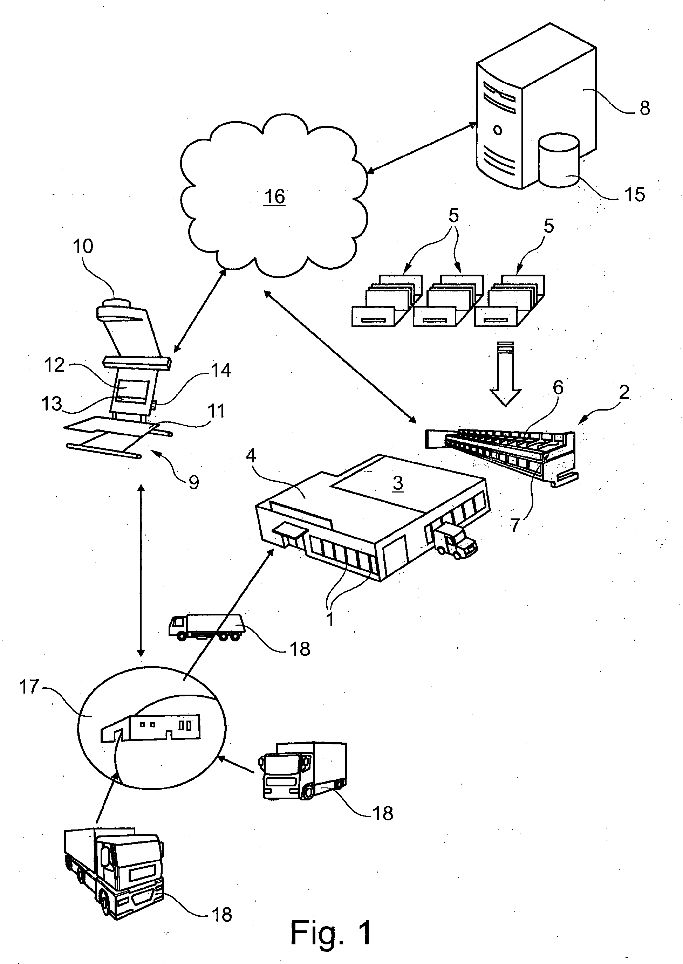

Sur la figure 1, on a illustré de façon très schématique un environnement d'une borne d'acquisition interactive 9 selon l'invention pour l'acquisition de modèles de filante. On a ainsi illustré des quais d'arrivée 1 du courrier par camion 18, train ou avion ou analogue dans un centre ou installation de préparation et de distribution du courrier où est rassemblé et distribué notamment le courrier des entreprises (qui sont principalement des expéditeurs en nombre).

Dans ce centre, on a illustré une machine de tri 2 postal qui se situe dans la zone de tri 3 proprement dite et aussi une zone de préparation 4 du courrier entre les quais d'arrivée 1 et la machine (ou les machines) de tri 2 où le courrier est mis en bacs ou sur chariots avec séparation des filantes en lots 5 comme illustré sur la figure 1 avant d'être passé en machine de tri 2.

La machine de tri 2 comporte ici un convoyeur de tri tel que 6 et des sorties de tri telles que 7. Le convoyeur de tri 6 est un système complexe qui incorpore en plus des moyens mécaniques de convoyage des envois postaux, à bandes de pincement ou analogues, un magasin de stockage du courrier à trier, un dépileur automatique qui prélève le courrier du magasin et le met en série sur chant par exemple, des périphériques du type caméra pour former une image numérique de chaque envoi postal et une unité de traitement de données chargée de réaliser le processus de reconnaissance automatique d'information d'adresse dans les images numériques et de commande du convoyeur pour diriger le courrier vers les sorties de tri adéquates.

Ces différents éléments de la machine de tri 2 ne sont pas tous représentés sur la figure 1 mais sont bien connus de l'Homme du métier.

On a illustré de façon schématique sur la figure 1 une unité de traitement de données 8 qui est connectée à la machine de tri 2 à travers un réseau de communication 16 comme internet ou analogue. Cette unité de traitement de données 8 peut être constituée par un réseau d'ordinateurs distribués sur plusieurs sites.

Dans la zone de préparation 4 du courrier, le courrier qui arrive sur palettes au niveau des quais est donc placé dans des bacs de manutention ou sur des chariots spécifiques pour être amené vers l'entrée des machines de tri 2. Le courrier préparé en bacs ou sur chariots peut rester en attente de tri dans la zone de préparation 4 pendant plusieurs jours comme cela est bien connu.

Selon l'invention, il est prévu de placer dans la zone de préparation 4 du courrier une ou plusieurs bornes d'acquisition interactives 9 pour saisir des modèles numériques de filantes en avance du passage des envois postaux de la filante dans la machine de tri 2.

Chaque borne d'acquisition interactive 9 comme illustré sur la figure 1 comprend un scanner avec une caméra 10, un socle de présentation 11 d'un envoi postal sur lequel l'Opérateur vient placer à plat face à la caméra 10 un exemplaire de courrier d'une filante pour saisir une image numérique en multi-niveaux de gris ou en couleur de la face de celui-ci comportant l'adresse de destinataire.

La borne d'acquisition interactive 9 comporte aussi une interface Homme/Machine du type à écran d'affichage 12 avec clavier d'ordinateur 13 (par exemple un clavier tactile) et pointeur (souris) 14 reliés à l'unité dé traitement de données 8 (qui peut en partie être interne à la borne d'acquisition interactive 9).

Selon l'invention, cette borne d'acquisition interactive 9 est connectée à une base de données contenant des enregistrements de modèle numérique de filante illustrée par 15, à travers le réseau de communication tel qu'internet 16. La borne d'acquisition interactive 9 peut être placée au plus près des lots 5 de courrier constituant les filantes, ici dans la zone de préparation 4 du courrier. Cette borne d'acquisition interactive 9 peut aussi être placée à d'autres endroits du processus de tri du courrier en amont de la première passe de tri, par exemple chez l'expéditeur en nombre.

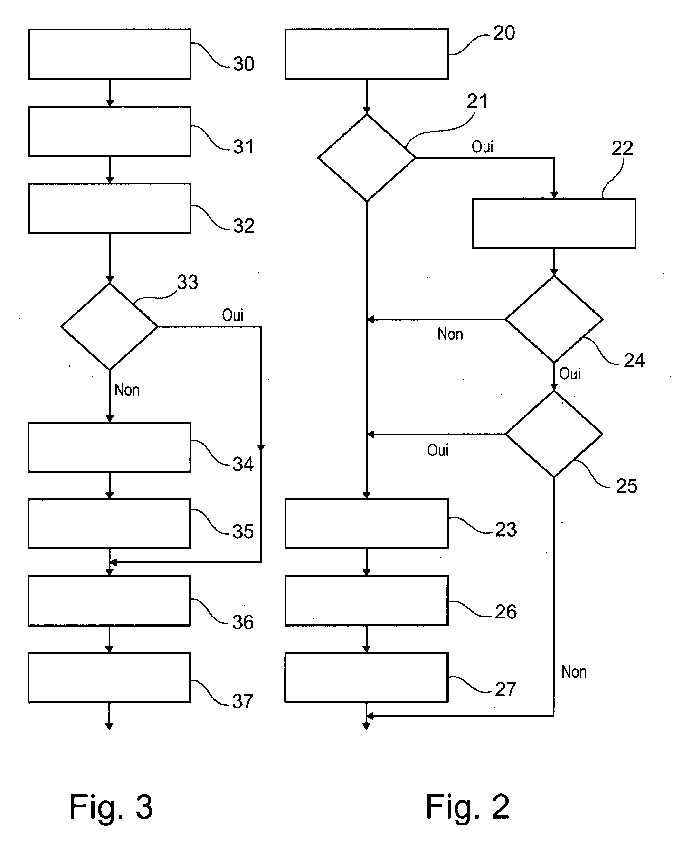

Selon l'invention, on fait fonctionner la borne d'acquisition interactive 9 de la façon suivante en se reportant à la figure 2. Le courrier d'une filante est en cours de préparation dans la zone de préparation 4 du centre par un Opérateur. Celui-ci prélève un envoi postal de la filante et le place à plat sur le socle de présentation 11 de la borne d'acquisition interactive 9 (étape 20). Une image numérique de cet envoi postal est saisie par la caméra 10 (en réponse par exemple à l'enfoncement d'un bouton de prise de vue sur la borne) et à partir de cette image numérique, des attributs ou descripteur de modèle de filante sont calculés par l'unité de traitement de données 8 comme indiqué plus haut. Par exemple, l'unité de traitement de données 8 extrait de l'image numérique des attributs globaux tels que la hauteur et la largeur de l'envoi postal, une valeur de luminance maximale - minimale - moyenne des points de l'image numérique, écart-type - énergie - entropie des valeurs de luminance. Egalement, l'unité de traitement de données 8 extrait et calcule aussi la valeur de luminance maximale - minimale - moyenne des points de l'image numérique, écart-type - énergie - entropie des valeurs de luminance dans des subdivisions multi-échelles de l'image numérique. Ces attributs globaux et locaux constituent donc une sorte de signature numérique du modèle de filante saisi sur la borne d'acquisition interactive 9.

Dans l'étape 21, le modèle de la filante saisi à travers la borne d'acquisition interactive 9 est comparé (par corrélation graphique des attributs numériques) aux modèles de filantes déjà enregistrés dans la base de données 15 et si on détecte une concordance avec un modèle de filante déjà présent dans la base de données 15, le processus se poursuit à l'étape 22. Dans le cas contraire, il se poursuit à l'étape 23.

Dans l'étape 22, un (ou plusieurs) modèle de filante est identifié dans la base de données 15. Il est affiché (l'image numérique type du modèle) à l'écran d'affichage 12 de la borne d'acquisition interactive 9. Suite à quoi, l'Opérateur a la possibilité de sélectionner ou non le modèle affiché dans l'étape 24. S'il a sélectionné le modèle affiché, il a la possibilité de modifier ou non les paramètres et indications liés à ce modèle affiché dans l'étape 25. Dans l'affirmative à l'étape 24, le processus se poursuit à l'étape 25. Dans la négative à l'étape 24, le processus se poursuit à l'étape 23. Dans l'affirmative à l'étape 25, le processus se poursuit à l'étape 23. Dans la négative à l'étape 25, le processus d'acquisition d'un modèle numérique de filante est terminé. A l'étape 23, l'Opérateur saisit sur la borne d'acquisition interactive 9 des paramètres ou indications comme une indication de la position spatiale du bloc d'adresse de destinataire (ou du bloc d'adresse expéditeur ou autre) dans l'image numérique des envois postaux de la filante correspondant au modèle considéré. L'indication de la position spatiale du bloc d'adresse peut être obtenue par exemple à l'aide du pointeur 14 sur la borne d'acquisition interactive 9. Comme autres indications, l'Opérateur peut aussi désigner l'expéditeur de l'envoi postal appartenant à la filante par son nom ou un code.

A la fin de l'étape 23, le processus se poursuit dans l'étape 26 pour désigner un algorithme de traitement, par exemple un algorithme de binarisation, spécifiquement adapté aux caractéristiques des images numériques des envois postaux correspondants à ce modèle de filante. Ensuite, le processus se poursuit dans l'étape 27 par l'enregistrement du modèle de filante avec les indications associées dans la base de données 15.

La désignation de l'algorithme le mieux adapté depuis la borne d'acquisition interactive 9, peut s'effectuer de la façon suivante. L'Opérateur introduit une information (contenu du bloc adresse) dans la borne d'acquisition interactive 9 puis un processus itératif de reconnaissance d'information est déclenché. Ce processus exploite, dans les différentes itérations, différents algorithmes à tester de sorte qu'à l'issue des itérations, on peut déterminer quel est l'algorithme le plus adapté, par exemple celui qui donne le résultat le plus proche de celui qui a été introduit par l'Opérateur. Dans le cas présent, des algorithmes de binarisation différents peuvent être testés pour obtenir une reconnaissance d'information d'adresse destinataire optimale par exemple dans le cas où l'adresse destinataire est imprimée sur des bandes opaques d'emballage en plastique.

Lors du passage des envois postaux d'une filante dans la machine de tri 2, le processus de traitement des envois postaux se déroule de la façon suivante en référence à la figure 3. A l'étape 30, l'image numérique de l'envoi postal courant est saisie par caméra dans la machine de tri 2. Des attributs d'image numérique (ou encore une signature d'image) sont calculés à partir de l'image numérique dans l'étape 31. Ces attributs sont comparables à ceux d'un modèle de filante. A l'étape 32, les modèles de filante dans la base de données 15 sont balayés pour détecter une concordance entre les attributs de l'image numérique de l'envoi postal courant et ceux d'un des modèles de la base de données. La détection de concordance peut être basée sur le calcul d'un coefficient de corrélation normalisé et sa comparaison à un certain seuil prédéfini. Si un modèle de filante concordant est détecté à l'étape 33, le processus se poursuit à l'étape 36 dans laquelle les indications associées au modèle de filante sont extraites et appliquées sur le processus de traitement en aval, par exemple sur le traitement de reconnaissance d'adresse : utilisation d'un certain algorithme de binarisation - lecture de l'adresse destinataire dans la zone d'intérêt identifiée par les données de position spatiale. Puis le processus se poursuit par l'étape 37 selon laquelle à l'issue de la reconnaissance d'adresse, le résultat de la reconnaissance est utilisé pour diriger automatiquement l'envoi postal courant à travers le convoyeur vers une sortie de tri prédéterminée de la machine de tri 2. De plus le résultat de la reconnaissance peut être enregistré en correspondance avec le modèle de filante dans la base de données 15 à des fins d'analyse statistique.

Dans la négative à l'étape 33, le processus peut se poursuivre par la génération automatique d'un nouveau modèle de filante avec génération automatique d'une position spatiale préférentielle du bloc d'adresse destinataire comme décrit dans le document de brevet EP 1 622 065. Suite à l'étape 33, à l'étape 34 le modèle de filante généré automatiquement est enregistré dans la base de données 15 et le processus se poursuit à l'étape 36 pour ce modèle de filante.

A noter que le dictionnaire des modèles de filante générés automatiquement à l'étape 33 dans une machine de tri 2 peut être consolidé automatiquement avec les modèles de filantes générés depuis les bornes 9 lors de la première passe de tri (ou de chaque passe subséquente) des envois postaux dans la machine de tri 2 sans sortir du cadre de l'invention. Cette consolidation peut consister à agréger les modèles de filantes dans une base de données en éliminant les doublons par exemple.

A noter également qu'un nouveau modèle de filante créé automatiquement à l'étape 24 peut être par la suite complété par un Opérateur machine comme indiqué précédemment à l'étape 25 de la figure 2.

De plus, les indications de désignation d'expéditeur associées aux modèles de filante dans la base de données 15 peuvent être agrégées sur différents modèles de filante correspondants par exemple à un seul expéditeur en nombre sans sortir du cadre de l'invention.

Pour ces mêmes expéditeurs identifiés grâce à ces modèles de filantes, un traitement automatique de différentes zones dans les images numériques des objets postaux de filante peut permettre de faire une vérification objet postal par objet postal sur les éléments d'affranchissement et sur la qualité de présentation de l'adresse destinataire par exemple, les résultats de cette vérification pouvant être utilisés par l'Opérateur postal pour moduler les éléments de facturation liés à cet expéditeur client. Pour ce faire, ces résultats peuvent être associés au modèle de filantes.

Sur la figure 1, on a illustré par la référencé 17 un centre de routage où des flux de courrier décentralisés amenés par camion 18 ou analogue sont fusionnés en filantes pour abaisser les coûts du tri postal avant d'être transférés encore par camion 18 ou analogue dans le centre de tri distribution du courrier. Les modèles de filantes peuvent ainsi être saisis depuis la ou les bornes d'acquisition interactive 9 dans le centre de routage 17 en amont du processus de tri distribution.

## Revendications

1. Procédé de traitement d'envois postaux homogènes ou filantes selon lequel dans une zone de préparation (4) du courrier on prépare les envois postaux d'une filante dans des bacs ou sur des chariots et on emmène ces envois postaux préparés vers l'entrée d'une machine de tri (2) postal pour une première passe de tri postal, et dans lequel on introduit des envois postaux en série dans la machine de tri (2) comprenant un convoyeur de tri (6) et des sorties de tri (7), on forme (30) dans la machine de tri (2) une image numérique de chaque envoi postal et on applique sur chaque image numérique un traitement de reconnaissance automatique d'une information d'adresse pour diriger (37) automatiquement l'envoi postal correspondant à travers le convoyeur de tri (6) vers une sortie de tri (7) déterminée de la machine de tri (2), et dans lequel on construit dans une base de données (15) un modèle numérique de filante qui est défini par des données caractérisant l'apparence graphique des envois postaux de la filante et qui est associé dans la base de données (15) à des indications de paramétrage exploitables par le traitement de reconnaissance automatique, comprenant les étapes suivantes en avance du premier passage des envois postaux de la filante dans la machine de tri (2) :
a) former, à l'aide d'une borne d'acquisition interactive (9) qui est disposée à distance de la machine de tri (2), une image numérique d'un certain envoi postal de la filante, ladite borne d'acquisition interactive (9) comportant un scanner avec une caméra (10), un socle de présentation (11) sur lequel un Opérateur vient placer à plat face à la caméra (10) ledit certain envoi postal de la filante pour saisir une image numérique de la face de celui-ci comportant une adresse de destinataire, une interface Homme/Machine avec écran d'affichage (12), clavier (13) et un pointeur (14) reliée à une unité de traitement de données (8) connectée à ladite base de données (15),
b) calculer dans l'unité de traitement de données (8) à partir de cette image numérique des attributs ou descripteurs de filante pour construire (20,21) dans ladite base de données (15), ledit modèle numérique de filante, et
c) associer (23) dans ladite base de données (15) ledit modèle de filante auxdites indications de paramétrages à partir de ladite borne d'acquisition interactive (9), lesdites indications étant saisies aussi depuis ladite borne d'acquisition interactive (9) et lesdites indications comprenant une indication de la position spatiale d'une zone d'intérêt dans l'image numérique dudit certain envoi qui est saisie à l'aide dudit pointeur
d) introduire une information correspondant au contenu d'un bloc d'adresse dans ladite borne d'acquisition interactive (9) pour déclencher un processus itératif de reconnaissance d'information qui exploite dans les différentes itérations différents algorithmes de binarisation et à l'issue des itérations, on détermine lequel des différents algorithmes de binarisation a donné le résultat le plus proche de ladite infirmation pour désigner cet algorithme de binarisation comme indication de paramétrage.

2. Procédé selon la revendication 1, dans lequel les indications saisies par l'intermédiaire de ladite borne d'acquisition interactive (9) comportent en plus des données de désignation d'un émetteur d'envois postaux.

3. Procédé selon la revendication 2, dans lequel lors de la détection qu'un envoi postal courant fait partie d'une filante représentée par un certain modèle enregistré dans ladite base de données (15), on associe audit certain modèle dans la base de données (15) des données résultant dudit traitement de reconnaissance sur l'image numérique de cet envoi postal courant.

4. Procédé selon la revendication 1, dans lequel ladite borne d'acquisition interactive (9) est placée dans une zone de préparation du courrier (4) d'un centre de tri dans laquelle est disposée la machine de tri (2).

5. Procédé selon la revendication 1, dans lequel ladite borne d'acquisition interactive (9) est placée dans un centre de routage du courrier (17).

6. Procédé selon l'une des revendications 1 à 5, dans lequel des autres modèles de filante sont construits automatiquement dans ladite base de données (15) à partir d'une succession d'images numériques d'envois postaux graphiquement homogènes formées dans la machine de tri (2) et dans lequel ces autres modèles de filantes sont consolidés avec les modèles de filante construits depuis une borne d'acquisition interactive (9) lors d'une passe de tri des envois postaux dans la machine de tri (2).

## Patentansprüche

1. Verfahren zum Verarbeiten von homogenen oder gereihten postalischen Sendungen, bei dem in einer Vorbereitungszone (4) des Versandgutes die postalischen Sendungen einer Reihe in Behältnissen oder auf Karren vorbereitet werden und diese vorbereiteten postalischen Sendungen zu dem Eingang einer postalischen Sortiermaschine (2) für einen ersten Postsortierdurchgang verbracht werden, und bei dem postalische Sendungen seriell in die Sortiermaschine (2), umfassend einen Sortierförderer (6) und Sortierausgänge (7), eingeführt werden, in der Sortiermaschine (2) ein digitales Bild jeder postalischen Sendung gebildet wird (30) und jedes digitale Bild einer automatischen Erkennungsbehandlung einer Adressinformation unterworfen wird, um die entsprechende postalische Sendung automatisch mittels des Sortierförderers (6) zu einem bestimmten Sortierausgang (7) der Sortiermaschine (2) zu richten (37), und bei dem in einer Datenbank (15) ein digitales Reihen-Modell erzeugt wird, das durch die grafische Erscheinung der postalischen Sendungen der Reihe charakterisierende Daten definiert ist und das in der Datenbank (15) mit durch die automatische Erkennungsbehandlung nutzbaren Parameterindikatoren verknüpft ist, umfassend die nachfolgenden Schritte vor dem ersten Durchgang der postalischen Sendungen der Reihe in der Sortiermaschine (2):
(a) Bilden, mit Hilfe eines beabstandet zu der Sortiermaschine (2) angeordneten interaktiven Erfassungsanschlusses (9), eines digitalen Bildes einer bestimmten postalischen Sendung der Reihe, wobei der interaktive Erfassungsanschluss (9) einen Scanner mit einer Kamera (10), einen Vorführunterbau (11), auf dem eine Bedienperson die bestimmte postalische Sendung der Reihe flach gegenüber der Kamera (10) platzieren kommt, um ein digitales Bild von deren eine Adresse des Empfängers umfassender Seite zu erfassen, ein Mensch-Maschine-Interface mit Anzeigebildschirm (12), Tastatur (13) und einen mit der Datenverarbeitungseinheit (8), die mit der Datenbank (15) verbunden ist, angeschlossenen Zeiger (14), umfasst,
(b) Berechnen in der Datenverarbeitungseinheit (8), ausgehend von diesem digitalen Bild, von Attributen oder Deskriptoren der Reihe zum Erzeugen (20, 21) des digitalen Reihen-Modells in der Datenbank (15), und
(c) Verknüpfen (23) in der Datenbank (15) des Reihen-Modells mit den Parameterangaben, ausgehend von dem interaktiven Erfassungsanschluss (9), wobei die Angaben auch von dem interaktiven Erfassungsanschluss (9) erfasst werden und die Angaben eine Angabe der räumlichen Position einer Interessenszone in dem digitalen Bild der bestimmten Sendung enthalten, die mittels des Zeigers erfasst wird,
(d) Einführen einer dem Inhalt eines Adressenblocks entsprechenden Information in den interaktiven Erfassungsanschluss (9) zum Auslösen eines iterativen Prozesses zum Erkennen der Information, welcher in den verschiedenen Iterationen verschiedene Binarisierungsalgorithmen nutzt, und am Ausgang der Iterationen Feststellen, welcher der verschiedenen Binarisierungsalgorithmen das nächstkommende Ergebnis der Information geliefert hat, um diesen Binarisierungsalgorithmus als Parameterangabe auszuwählen.

2. Verfahren nach Anspruch 1, bei dem die durch den interaktiven Erfassungsanschluss (9) erfassten Angaben ferner Daten zur Bezeichnung eines Senders postalischer Sendungen enthalten.

3. Verfahren nach Anspruch 2, bei dem bei der Erfassung, dass eine laufende postalische Sendung Teil einer durch ein bestimmtes in der Datenbank (15) gespeichertes Modell repräsentierten Reihe ist, dem bestimmten Modell in der Datenbank (15) Daten zugeordnet werden, die von der Erkennungsbehandlung des digitalen Bilds dieser laufenden postalischen Sendung stammen.

4. Verfahren nach Anspruch 1, bei dem der interaktive Erfassungsanschluss (9) in einer Versandgutvorbereitungszone (4) eines Sortierzentrums angeordnet ist, in welcher die Sortiermaschine (2) angeordnet ist.

5. Verfahren nach Anspruch 1, bei dem der interaktive Erfassungsanschluss (9) in einem Versandgutverteilzentrum (17) angeordnet ist.

6. Verfahren nach einem der Ansprüche 1 bis 5, bei dem andere Reihen-Modelle automatisch in der Datenbank (15), ausgehend von einer in der Sortiermaschine (2) gebildeten Folge digitaler Bilder grafisch homogener postalischer Sendungen, erzeugt werden, und bei dem diese anderen Reihen-Modelle bei einem Sortierdurchgang der postalischen Sendungen in der Sortiermaschine (2) mit den ausgehend von einem interaktiven Erfassungsanschluss (9) erzeugten Reihen-Modellen konsolidiert werden.

## Claims

1. A method of processing uniform mailpieces or "runs", in which, in a mail preparation zone (4), the mailpieces of a "run" are prepared in trays or on trolleys, and the prepared mailpieces are brought to the inlet of a postal sorting machine (2) for a first sorting pass, and in which the mailpieces are fed in series into the sorting machine (2) comprising a sorting conveyor (6) and sorting outlets (7), a digital image of each mailpiece is formed (30) in the sorting machine (2), and processing is applied to each digital image for automatically recognizing address information for the purpose of automatically directing (37) the corresponding mailpiece through the sorting conveyor (6) towards a determined sorting outlet (7) of the sorting machine (2), and in which a digital model of the run is built in a database (15), the digital run model being defined by data characterizing the graphical appearance of the mailpieces of the run and being associated in the database (15) with setting indications usable by the automatic recognition processing, said method comprising the following steps in advance of the first pass of the mailpieces of the run through the sorting machine (2):
a) using an interactive acquisition terminal (9) that is located remote from the sorting machine (2) to form a digital image of a certain mailpiece of the run, said interactive acquisition terminal (9) comprising a scanner with a camera (10), a presentation stand (11) on which an operator places said certain mailpiece of the run flat and facing the camera (10) in order to input a digital image of the face of said mailpiece that bears a recipient address, and a man/machine interface with a display screen (12), with a keyboard (13) and a pointer (14), which interface is connected to a data-processing unit (8) connected to said database (15);
b) in the data-processing unit (8) and on the basis of this digital image, computing attributes or descriptors of the run so as to build (20, 21) said digital run model in said database (15); and
c) in said database (15), associating (23) said run model with said setting indications from said interactive acquisition terminal (9), said indications also being input from said interactive acquisition terminal (9) and said indications comprising an indication of location in two dimensions of a region of interest in said digital image of said certain mailpiece which is being input with said pointer
d) into said interactive acquisition terminal (9), introducing an indication corresponding to the contents of an address block to trigger an iterative information recognition process which operates in various different iterations different binarization algorithms and at the end of iterations, different binarization algorithms are determined which gave the result closed to the said information for designating this binarization algorithms as indication parameter.

2. A method according to claim 1, in which the indications input via said interactive acquisition terminal (9) further include data designating a mailpiece issuer.

3. A method according to claim 2, in which, while it is being detected whether a current mailpiece is part of a run represented by a certain model recorded in said database (15), said certain model is associated in the database (15) with data resulting from said recognition processing on the digital image of said current mailpiece.

4. A method according to claim 1, in which said interactive acquisition terminal (9) is placed in a mail preparation zone (4) of a sorting center, in which zone the sorting machine (2) is located.

5. A method according to claim 1, in which said interactive acquisition terminal (9) is placed in a mail routing center (17).

6. A method according to any one of claims 1 to 5, in which other run models are built automatically in said database (15) on the basis of a succession of digital images of mailpieces that are graphically uniform and that are formed in the sorting machine (2), and in which these other run models are consolidated with the run models built from an interactive acquisition terminal (9) during a sorting pass of the mailpieces through the sorting machine (2).
